# FASCICULE DE BREVET EUROPEEN

(11) **EP 2 121 383 B1**
(45) Date de publication et mention de la délivrance du brevet: **30.03.2011**
(21) Numéro de dépôt: 08761957.3
(22) Date de dépôt: 22.01.2008
(51) Int. Cl.: B60R 13/02

(54) **DISPOSITIF DE POSITIONNEMENT D'UNE GARNITURE DANS UNE GORGE DE JOINT DE PORTE DE VEHICULE**
VORRICHTUNG ZUR POSITIONIERUNG EINER ARMATUR IN EINER FAHRZEUGTÜRRINNE
DEVICE FOR POSITIONING A FITTING IN A VEHICLE DOOR SEAL GROOVE

(30) Priorité: 22.01.2007 FR 0752794
(43) Date de publication de la demande: 25.11.2009
(73) Titulaire: Renault SAS, 92100 Boulogne Billancourt (FR)
(72) Inventeur: MOSSU, Stéphane, F-78114 Magny-les-Hameaux (FR)
(86) Numéro de dépôt international: PCT/FR2008/050090
(87) Numéro de publication internationale: WO 2008/119898

(56) Documents cités:
- FR-A- 2 737 451
- GB-A- 2 307 454
- US-A- 5 741 044
- US-A1- 2004 160 078

## Description

### DOMAINE DE L'INVENTION

La présente invention se rapporte de manière générale au montage d'une pièce, et plus particulièrement au montage et au positionnement de garnitures dans un véhicule automobile, objet du document FR-A-2737451.

### ETAT DE LA TECHNIQUE

Les montages des véhicules automobiles doivent toujours être plus rapides et prévis pour gagner en productivité. Or le montage des garnitures utilisées pour habiller les habitacles de véhicules automobiles est coûteux en temps et parfois fastidieux à effectuer pour obtenir le positionnement désiré.

Pour ce faire, il a été développé des garnitures pouvant être clipsées sur des pièces pourvues de gorges adaptées. Dans le cas d'une garniture de pied de porte par exemple; cette dernière a une forme longitudinale et a des bords courbés vers l'intérieur, ces bords étant destinés à être insérés dans la gorge correspondante, une gorge de joint de porte par exemple.

Pour faciliter le montage de cette pièce et l'insérer correctement dans la gorge du joint de porte, une pièce intermédiaire est prévue, cette pièce intermédiaire étant couplée au joint de porte et servant de guide sur lequel les parties courbées de la garniture glissent avant de s'insérer dans la gorge. Cette pièce intermédiaire permet ainsi de positionner correctement la garniture par rapport au joint de porte. Néanmoins, un positionnement plus précis de la garniture par rapport au joint de porte est nécessaire, ce qui requiert d'ajuster manuellement la position de la garniture par rapport à la largeur de la gorge. Or cet ajustement manuel est fastidieux et est en outre rendu très difficile par la rigidité du matériau formant la garniture.

Un but de la présente invention est donc de fournir un dispositif de positionnement d'une pièce, telle qu'une garniture de véhicule automobile, par rapport à une autre pièce quand ces deux pièces coopèrent par clipsage.

### EXPOSE DE L'INTENTION

A cette fin, on propose un dispositif de positionnement d'une première pièce par rapport à une deuxième pièce, la première pièce comprenant au moins un élément de fixation apte à coopérer avec une gorge formée sur la deuxième pièce, l'élément de fixation étant inséré dans la gorge par déformation plastique de la première pièce, une pièce intermédiaire étant en outre couplée à la deuxième pièce de façon à former un guide sur lequel l'élément de fixation prend appui jusqu'à son insertion dans la gorge, caractérisé en ce que la première pièce comprend au moins un organe de positionnement disposé de manière à venir en appui sur le guide et à autoriser l'insertion de l'élément de fixation dans la gorge seulement lorsque l'organe de positionnement a franchi complètement la pièce intermédiaire.

Des aspects préférés mais non limitatifs du dispositif de positionnement selon l'invention sont les suivants :
- l'élément de fixation et l'organe de positionnement ont respectivement des surfaces d'appui permettant un glissement de la première pièce sur le guide selon une direction transversale à la gorge, l'organe de positionnement étant dimensionné de manière à ce que la surface d'appui de l'élément de fixation soit positionnée selon un positionnement prédéfini une fois l'élément de fixation inséré dans la gorge ;
- la surface d'appui de l'organe de positionnement a une longueur dans la direction transversale dimensionnée en fonction du positionnement prédéfini de la surface d'appui de l'élément de fixation dans la gorge ;
- les surfaces d'appui de l'organe de positionnement et de l'élément de fixation forment un plan unique;
- la première pièce comprend une pluralité d'organes de positionnement agencés de manière à ce que l'élément de fixation dans son ensemble soit positionné selon un positionnement prédéfini une fois l'élément de fixation inséré dans la gorge ;
- la première pièce a une forme longitudinale avec des bords courbés vers l'intérieur de manière à former des éléments de fixation s'étendant longitudinalement, et en ce que la première pièce comprend une pluralité d'organes de positionnement formés pour être disposés dans la partie convexe de la courbure des bords courbés vers l'intérieur ;
- la première pièce est une pièce destinée à être fixée dans un véhicule automobile ;
- la première pièce est une garniture de pied de porte d'un véhicule automobile destiné à être fixée le montant de porte correspondant par l'intermédiaire d'un joint de porte, le joint de porte formant la deuxième pièce.

### DESCRIPTION DES FIGURES

D'autres caractéristiques et avantages de l'invention ressortiront de la description qui suit, laquelle est purement illustrative et non limitative et doit être lue au regard des dessins annexés, sur lesquels :
- la figure 1 est une représentation tridimensionnelle partielle d'un dispositif de positionnement d'une garniture de véhicule automobile;
- la figure 2 est une représentation tridimensionnelle partielle d'un dispositif de positionnement d'une garniture de véhicule automobile;
- la figure 3 est une coupe schématique du dispositif de positionnement illustré à la figure 1 monté dans une gorge de joint de porte ;
- la figure 4 est une coupe schématique illustrant le montage et le positionnement du dispositif de positionnement illustré à la figure 2 dans une gorge de porte.

### DESCRIPTION DETAILLEE DE L'INVENTION

La description qui suit est faite en référence au positionnement d'une garniture de véhicule sur un joint de porte, mais le dispositif de positionnement selon l'invention n'est en aucun cas limité à ce mode de réalisation particulier et pourra être adapté à toute autre pièce destinée à être fixée sur une autre pièce par déformation plastique.

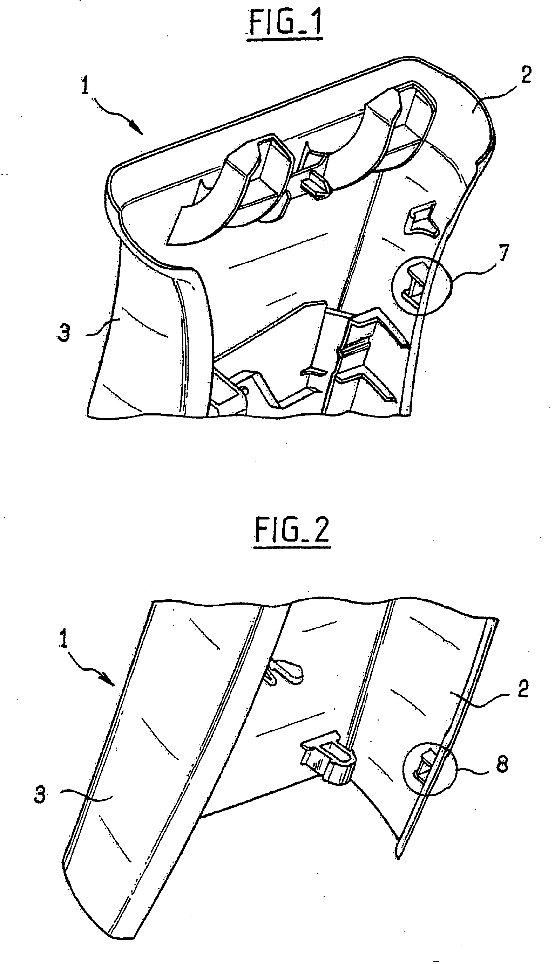

Les figures 1 et 2 sont des représentations partielles d'une garniture de porte 1, selon un mode de réalisation, destinée à être positionné et fixée sur un joint de porte par clipsage. Le clipsage de la garniture consiste en l'insertion d'un ou plusieurs éléments de fixation formés sur la garniture dans une gorge ménagée dans le joint de porte.

Dans l'exemple de garniture illustré aux figures 1 et 2, la garniture 1 a une forme longitudinale avec des bords (2,3) courbés vers l'intérieur. Ces bords (2;3) ont une courbure telle qu'ils forment les éléments de fixation destinés à être insérés dans la gorge du joint de porte.

Le clipsage de la garniture sur le joint de porte est rendu possible par l'utilisation d'une pièce intermédiaire sur laquelle les éléments de fixation, c'est à dire les bords courbés vers l'intérieur (2;3), de la garniture 1 prennent appui pour glisser jusqu'à venir s'insérer dans la gorge du joint de porte.

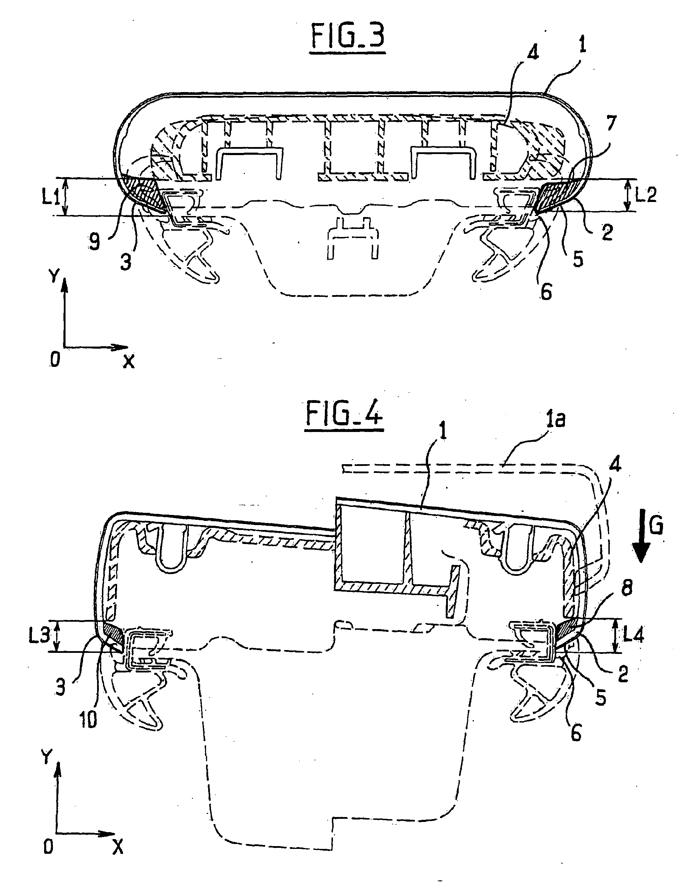

Pour mettre en place la garniture 1 sur le joint de porte par clipsage, on contraint la garniture sur la pièce intermédiaire, entrainant ainsi une déformation plastique de la garniture 1 de telle sorte que la garniture 1 a tendance à s'ouvrir et que les extrémités des bords courbés (2;3) prennent appui sur la pièce intermédiaire. Cette position ouverte de la garniture est illustrée à la figure 4 sur laquelle la garniture la ouverte est représentée en pointillés. Sur cette même figure 4 est illustrée la direction globale de glissement G de la garniture 1 par rapport à la pièce intermédiaire 4, induisant un glissement des bords courbés (2;3) de la garniture sur la pièce intermédiaire 4, en direction de la gorge 5 de joint de porte 6.

La pièce intermédiaire 4 est couplée au joint de porte 6 de sorte qu'elle forme un guide pour la mise en place de la garniture permettant de centrer correctement la garniture 1 par rapport au joint 6. En se basant sur le référentiel (O,X,Y) des figures 3 et 4, on peut donc dire que la pièce intermédiaire permet un positionnement précis selon l'axe X.

La garniture 1 est en outre pourvue d'un ou plusieurs organes de positionnement permettant cette fois-ci un positionnement selon l'axe Y très précis. Ainsi, la coopération des organes de positionnement et de la pièce intermédiaire permet un positionnement extrêmement précis de la garniture 1 par rapport au joint de porte 6.

En effet, un ou plusieurs organes de positionnement sont prévus pour retarder l'insertion des éléments de fixation (2;3) de la garniture 1 dans la gorge 5 jusqu'à ce que ces derniers aient atteint une position prédéfinie désirée, notamment selon l'axe Y. Plus précisément, les organes de positionnement viennent en appui sur le guide et empêchent que les extrémités des bords courbés (2;3) dé la garniture 1 ne prennent appui dans la gorge 5 du joint de porte 6 tant que la garniture 1 n'a pas atteint la position prédéfinie. En conséquence, les organes de positionnement sont disposés de manière à venir en appui sur le guide et à autoriser l'insertion de l'élément de fixation (2;3) dans la gorge 5 seulement lorsque l'organe de positionnement (4;8;9;10) a franchi complètement la pièce intermédiaire 4.

Ces organes de positionnement sont formés dans la garniture 1 de manière à retarder la fermeture de la garniture 1. On peut par exemple prévoir des organes (7;8;9;10) formés à l'intérieur de la courbure des bords courbés, c'est à dire dans la partie convexe de cette courbure, de sorte que ces organes (7;8;9;10) présentent une surface destinée à venir en appui sur la pièce intermédiaire 4 dans le prolongement de la surface d'appui des extrémités des bords courbés (2;3).

Selon un mode préféré mais non nécessaire, les organes de positionnement (7;8;9;10) présentent des surfaces d'appui formant un seul et même plan avec les surfaces d'appui des extrémités de bords courbés (2;3) correspondant.

Ainsi, une fois que les surfaces d'appui des bords courbés (2;3) de la garniture 1 seront franchis, la fermeture de la garniture 1 dans la gorge 5 est empêchée par les organes de positionnement (7;8;9;10) prenant également appui sur la pièce intermédiaire 4. La fermeture de la garniture 1 sur la gorge 5 interviendra uniquement quand les organes de positionnement (7;8;9;10) seront totalement franchis, cette fermeture due à la déformation plastique du matériau permettant en conséquence de positionner les surfaces d'appui des bords courbés (2;3) à la position prédéfinie en Y dans la gorge 5 de joint 6.

De ce fait, il convient de dimensionner les organes de positionnement (7;8;9;10) en fonction de la position prédéfinie désirée des bords courbés (2;3) dans la gorges 5.

Il conviendra en particulier de dimensionner correctement chaque organe de positionnement suivant la direction de glissement de l'organe de positionnement considéré par rapport à la pièce intermédiaire 4. Cette dimension va en effet régir le moment de franchissement complet de l'organe de positionnement par rapport à la pièce intermédiaire et conditionnera en conséquence le moment de fermeture de la garniture 1, et donc son positionnement selon l'axe Y.

Dans un mode de réalisation préféré de l'invention, on utilise plusieurs organes de positionnement, tel qu'un réseau de nervures (7;8;9;10) disposées dans la courbure des bords courbés (2;3) de la garniture 1. Dans les modes de réalisations présentés aux figures 3 et 4, on prévoit deux nervures (7;8) dans l'un des bords courbés (2) et deux autres nervures (9;10) dans l'autre bord courbé (3).

Le dimensionnement de chacune de ces nervures est adapté en fonction de la position prédéfinie désirée de la garniture 1 une fois en place. Ainsi, chacune de ces nervures 7, 8, 9, et 10 sera adaptée en fonction des longueurs L2, L4, L1, et L3, correspondant chacune à la distance entre la position prédéfinie de l'extrémité du bord courbé dans la gorge et la fin de la surface d'appui de la pièce intermédiaire. L'ajustement de la dimension de ces nervures permet non seulement d'effectuer localement un positionnement précis de l'extrémité de l'élément de fixation de la garniture, mais également un positionnement global de la garniture précis suivant l'axe Y.

Ce principe de positionnement d'une pièce à fixer sur une autre par déformation plastique peut être adapté à tout autre type de pièces, en particulier dans le domaine automobile, On adaptera en particulier les formes et dimensions des nervures ainsi que leur nombre et leur positionnement en fonction de la forme des pièces à assembler, ainsi que de la position relative désirée d'une pièce par rapport à une autre.

## Revendications

1. Dispositif de positionnement d'une première pièce (1) par rapport à une deuxième pièce 6), la première pièce (1) comprenant au moins un élément de fixation (2;3) apte à coopérer avec une gorge (5) formée sur la deuxième pièce (6), l'élément de fixation (2;3) étant inséré dans la gorge (5) par déformation plastique de la première pièce (1), une pièce intermédiaire (4) étant en outre couplée à la deuxième pièce (6) de façon à former un guide sur lequel l'élément de fixation (2;3) prend appui jusqu'à son insertion dans la gorge (5), **caractérisé en ce que** la première pièce (1) comprend au moins un organe de positionnement (4;8;9;10) disposé de manière à venir en appui sur le guide et à autoriser l'insertion de l'élément de fixation (2;3) dans la gorge (5) seulement lorsque l'organe de positionnement (4;8;9;10) a franchi complètement la pièce intermédiaire (4).

2. Dispositif selon la revendication 1, **caractérisé en ce que** l'élément de fixation (2;3) et l'organe de positionnement (4-;8;9;10) ont respectivement des surfaces d'appui permettant un glissement de la première pièce (1) sur le guide selon une direction transversale à la gorge (5), l'organe de positionnement (4;8;9;10) étant dimensionné de manière à ce que la surface d'appui de l'élément de fixation (2;3) soit positionnée selon un positionnement prédéfini une fois l'élément de fixation (2;3) inséré dans la gorge (5).

3. Dispositif selon la revendication 2, **caractérisé en ce que** la surface d'appui de l'organe de positionnement (4;8;9;10) a une longueur dans la direction transversale dimensionnée en fonction du positionnement prédéfini de la surface d'appui de l'élément de fixation (2;3) dans la gorge (5).

4. Dispositif selon l'une quelconque des revendications 2 à 3, **caractérisé en ce que** les surfaces d'appui de l'organe de positionnement (4;8;9;10) et de l'élément de fixation (2;3) forment un plan unique.

5. Dispositif selon l'une quelconque des revendications 1 à 4, **caractérisé en ce que** la première pièce (1) comprend une pluralité d'organes de positionnement (4;8;9;10) agencés de manière à ce que l'élément de fixation (2;3) dans son ensemble soit positionné selon un positionnement prédéfini une fois l'élément de fixation (2;3) inséré dans la gorge (5).

6. Dispositif selon l'une quelconque des revendications 1 à 5, **caractérisé en ce que** la première pièce (1) a une forme longitudinale avec des bords courbés (2;3) vers l'intérieur de manière à former des éléments de fixation (2;3) s'étendant longitudinalement, et **en ce que** la première pièce (1) comprend une pluralité d'organes de positionnement (4;8;9;10) formés pour être disposés dans la partie convexe de la courbure des bords courbés (2;3) vers l'intérieur.

7. Dispositif selon l'une quelconque des revendications 1 à 6, **caractérisé en ce que** la première pièce (1) est une pièce destinée à être fixée dans un véhicule automobile.

8. Dispositif selon l'une quelconque des revendications 1 à 6, **caractérisé en ce que** la première pièce (1) est une garniture de pied de porte d'un véhicule automobile destinée à être fixée sur le montant de porte correspondant par l'intermédiaire d'un joint de porte (6), le joint de porte (6) formant la deuxième pièce (6).

## Claims

1. Device for positioning a first part (1) relative to a second part (6), the first part (1) comprising at least one fastening element (2; 3) capable of interacting with a groove (5) formed on the second part (6), the fastening element (2; 3) being inserted into the groove (5) by plastic deformation of the first part (1), an intermediate part (4) also being coupled to the second part (6) so as to form a guide on which the fastening element (2; 3) rests until it is inserted into the groove (5), **characterized in that** the first part (1) comprises at least one positioning member (7; 8; 9; 10) placed so as to rest on the guide and to allow the insertion of the fastening element (2; 3) into the groove (5) only when the positioning member (7; 8; 9; 10) has completely passed beyond the intermediate part (4).

2. Device according to Claim 1, **characterized in that** the fastening element (2; 3) and the positioning member (7; 8; 9; 10) have respectively bearing surfaces allowing the first part (1) to slide on the guide in a direction transverse to the groove (5), the positioning member (7; 8; 9; 10) being designed so that the bearing surface of the fastening element (2; 3) is positioned in a predefined position once the fastening element (2; 3) is inserted into the groove (5).

3. Device according to Claim 2, **characterized in that** the bearing surface of the positioning member (7; 8; 9; 10) has a length in the transverse direction that is designed according to the predefined position of the bearing surface of the fastening element (2; 3) in the groove (5).

4. Device according to either one of Claims 2 or 3, **characterized in that** the bearing surfaces of the positioning member (7; 8; 9; 10) and of the fastening element (2; 3) form a single plane.

5. Device according to any one of Claims 1 to 4, **characterized in that** the first part (1) comprises a plurality of positioning members (7; 8; 9; 10) arranged so that the fastening element (2; 3) in its entirety is positioned in a predefined position once the fastening element (2; 3) is inserted into the groove (5).

6. Device according to any one of Claims 1 to 5, **characterized in that** the first part (1) has a longitudinal shape with edges (2; 3) curved inward so as to form fastening elements (2; 3) extending longitudinally, and **in that** the first part (1) comprises a plurality of positioning members (7; 8; 9; 10) formed in order to be placed in the convex portion of the curvature of the inwardlycurved edges (2; 3).

7. Device according to any one of Claims 1 to 6, **characterized in that** the first part (1) is a part designed to be attached in a motor vehicle.

8. Device according to any one of Claims 1 to 6, **characterized in that** the first part (1) is a door-bottom trim of a motor vehicle designed to be attached to the corresponding door post via a door seal (6), the door seal (6) forming the second part (6).

## Patentansprüche

1. Vorrichtung zum Positionieren eines ersten Bauteils (1) bezüglich eines zweiten Bauteils (6), wobei das erste Bauteil (1) mindestens ein Befestigungselement (2; 3) enthält, das mit einer auf dem zweiten Bauteil (6) geformten Rille (5) zusammenwirken kann, wobei das Befestigungselement (2; 3) durch plastische Verformung des ersten Bauteils (1) in die Rille (5) eingeführt wird, wobei ein Zwischenbauteil (4) außerdem mit dem zweiten Bauteil (6) gekoppelt ist, um eine Führung zu bilden, auf der das Befestigungselement (2; 3) bis zu seiner Einführung in die Rille (5) aufliegt, **dadurch gekennzeichnet, dass** das erste Bauteil (1) mindestens ein Positionierorgan (7; 8; 9; 10) enthält, das so angeordnet ist, dass es auf der Führung aufliegt und die Einführung des Befestigungselements (2; 3) in die Rille (5) nur erlaubt, wenn das Positionierorgan (7; 8; 9; 10) das Zwischenbauteil (4) vollständig überquert hat.

2. Vorrichtung nach Anspruch 1, **dadurch gekennzeichnet, dass** das Befestigungselement (2; 3) und das Positionierorgan (7; 8; 9; 10) je Auflageflächen haben, die ein Gleiten des ersten Bauteils (1) auf der Führung in einer Querrichtung zur Rille (5) erlauben, wobei das Positionierorgan (7; 8; 9; 10) so bemessen ist, dass die Auflagefläche des Befestigungselements (2; 3) gemäß einer vordefinierten Positionierung positioniert ist, sobald das Befestigungselement (2; 3) in die Rille (5) eingeführt ist.

3. Vorrichtung nach Anspruch 2, **dadurch gekennzeichnet, dass** die Auflagefläche des Positionierorgans (7; 8; 9; 10) eine Länge in Querrichtung hat, die abhängig von der vordefinierten Positionierung der Auflagefläche des Befestigungselements (2; 3) in der Rille (5) bemessen ist.

4. Vorrichtung nach einem der Ansprüche 2 bis 3, **dadurch gekennzeichnet, dass** die Auflageflächen des Positionierorgans (7; 8; 9; 10) und des Befestigungselements (2; 3) eine einzige Ebene bilden.

5. Vorrichtung nach einem der Ansprüche 1 bis 4, **dadurch gekennzeichnet, dass** das erste Bauteil (1) mehrere Positionierorgane (7; 8; 9; 10) enthält, die so angeordnet sind, dass das Befestigungselement (2; 3) in seiner Gesamtheit gemäß einer vordefinierten Positionierung positioniert ist, wenn das Befestigungselement (2; 3) in die Rille (5) eingeführt ist.

6. Vorrichtung nach einem der Ansprüche 1 bis 5, **dadurch gekennzeichnet, dass** das erste Bauteil (1) eine längliche Form mit nach innen gekrümmten Rändern (2; 3) hat, um sich in Längsrichtung erstreckende Befestigungselemente (2; 3) zu formen, und dass das erste Bauteil (1) mehrere Positionierorgane (7; 8; 9; 10) enthält, die geformt sind, um im konvexen Bereich der Krümmung der nach innen gekrümmten Ränder (2; 3) angeordnet zu werden.

7. Vorrichtung nach einem der Ansprüche 1 bis 6, **dadurch gekennzeichnet, dass** das erste Bauteil (1) ein Bauteil ist, das dazu bestimmt ist, in einem Kraftfahrzeug befestigt zu werden.

8. Vorrichtung nach einem der Ansprüche 1 bis 6, **dadurch gekennzeichnet, dass** das erste Bauteil (1) eine Türschwellenverkleidung eines Kraftfahrzeugs ist, die dazu bestimmt ist, am entsprechenden Türpfosten mittels einer Türdichtung (6) befestigt zu werden, wobei die Türdichtung (6) das zweite Bauteil (6) bildet.
